# EUROPÄISCHE PATENTSCHRIFT

(11) **EP 0 669 566 B1**
(45) Veröffentlichungstag und Bekanntmachung des Hinweises auf die Patenterteilung: **27.01.1999**
(21) Anmeldenummer: 94117828.7
(22) Anmeldetag: 11.11.1994
(51) Int. Cl.: G05D 23/13

(54) **Wasser-Dampf-Mischvorrichtung**
Water-steam mixing device
Mélangeur eau-vapeur

(30) Priorität: 25.02.1994 DE 4406222
(43) Veröffentlichungstag der Anmeldung: 30.08.1995
(73) Patentinhaber: Weinhold, Karl Dipl.-Ing. (FH), D-41464 Neuss (DE)
(72) Erfinder: Weinhold, Karl Dipl.-Ing. (FH), D-41464 Neuss (DE)
(74) Vertreter: Cohausz & Florack

(56) Entgegenhaltungen:
- GB-A- 824 965
- US-A- 3 626 966
- PATENT ABSTRACTS OF JAPAN vol. 17 no. 196 (M-1397) ,16.April 1933 & JP-A-04 341675 (MATSUSHITA) 27.November 1992,

## Beschreibung

Die Erfindung betrifft eine Vorrichtung zum Mischen von Wasser und Wasserdampf, umfassend ein einen zylindrischen Hohlraum aufweisendes Gehäuse, an das quer zur Achse seines zylindrischen Hohlraums ein Stutzen für Wasserdampf und in axialem Abstand zu diesem ein weiterer Stutzen für Wasser angesetzt oder angeformt sind, einen in dem Gehäuse axial verschiebbaren Kolben, und ein in dem Gehäuse angeordnetes, vom Wasserdruck gesteuertes Ventil, das bei Unterbrechung der Zufuhr von Wasser eine Zuleitung für Wasserdampf automatisch schließt, wobei das Ventil unter dem Druck einer Feder steht, die das Ventil bei fehlendem Wasserdruck gegen einen Endanschlag in die Schließstellung schiebt, in welcher das Ventil den Durchgang des Wasserdampfes sperrt, wobei bei vorhandenem Wasserdruck das Ventil gegen die Wirkung der Feder in die Öffnungsstellung verschoben wird, in der es den Durchgang des Wasserdampfes erlaubt.

Die chemische Industrie verwendet Dampfhähne und Dampfpistolen für Naßdampf bis maximal 200°C. Es besteht jedoch auch Bedarf für eine Wasser-Wasserdampf-Mischung bzw. ein Gerät, das eine solche Mischung aus den Einzelkomponenten Wasser bzw. Wasserdampf erzeugt, die dann mittels Pistole zum Einsatz gelangen kann. Eine solche Wasser-Dampf-Mischung darf eine Temperatur von maximal 200°C haben. Bei höheren Temperaturen als 200°C besteht die Gefahr, daß die Zuleitungsschläuche reißen, daß es zu örtlichen Überhitzungen oder zu Verbrennungen kommt.

Aus der GB-A-824965 ist eine Wasser-Dampf-Mischvorrichtung der eingangs genannten Art bekannt, in der bei fehlendem oder zu geringem Wasserdruck die Zuleitung für Wasserdampf durch ein vom Wasserdruck gesteuertes Ventil automatisch abgesperrt wird, um die Gefahr örtlicher Überhitzungen oder Verbrennungen auszuschließen.

Bei dieser bekannten Wasser-Dampf-Mischvorrichtung besteht allerdings gleichwohl die Gefahr, daß die abgegebene Mischung eine vorgegebene Temperatur, wie etwa 200°C überschreitet, wenn das zugeführte Wasser zwar einen ausreichenden Druck, jedoch eine zu hohe Temperatur und/oder der der Mischvorrichtung zugeführte Wasserdampf eine zu hohe Temperatur aufweist.

Der Erfindung liegt daher die Aufgabe zugrunde, eine Wasser-Dampf-Mischvorrichtung zu schaffen, bei der sichergestellt sein soll, daß die Mischung eine vorgegebene Temperatur keinesfalls überschreitet, und die zugleich eine Anpassung an unterschiedliche Dampf- und/oder Wassertemperaturen ermöglicht.

Zur Lösung dieser Aufgabe wird bei der gattungsgemäßen Vorrichtung vorgeschlagen, daß in dem zylindrischen Hohlraum des Gehäuses ein Zylinder zum Aufnehmen des Kolbens formschlüssig eingesetzt ist, wobei in dem Zylinder Durchtrittsöffnungen auf der Dampfseite und Durchtrittsöffnungen auf der Wasserseite vorgesehen sind, die in der Öffnungsstellung des ventils mit Durchtrittsöffnungen im Kolben auf der Dampfseite und Durchtrittsöffnungen im Kolben auf der Wasserseite fluchten und in der Schließstellung des Kolbens einander nicht überdecken, das Ventil koaxial und formschlüssig in einer Axialbohrung im Kolben gegenüber diesem axial verschiebbar ist und einen dem Wasserdruck ausgesetzten Kopfabschnitt aufweist, wobei das Ventil in der Schließstellung den Durchgang des Wasserdampfes durch die Öffnungen im Kolben sperrt und in der Öffnungsstellung den Durchgang des Wasserdampfes durch die Öffnungen im Kolben öffnet, und die Durchtrittsöffnungen im Kolben so angeordnet sind, daß das Mischungsverhältnis Wasser-Wasserdampf veränderbar ist.

Die erfindungsgemäße Vorrichtung löst die gestellte Aufgabe, denn bei fehlendem oder zu geringem Wasserdruck, wenn also die Gefahr besteht, daß der Wasserdampf durch das Zumischen von Kaltwasser nicht unter die vorgegebene Maximaltemperatur abgekühlt wird, verringert bzw. schließt das Ventil selbsttätig die Zufuhr von Wasserdampf. Darüber hinaus ermöglicht die erfindungsgemäße Vorrichtung eine Temperatursteuerung, da die Durchtrittsöffnungen im Kolben so angeordnet sind, daß das Mischungsverhältnis von Wasser zu Wasserdampf veränderbar ist. Dazu sind insbesondere die Querschnitte der Durchgangsöffnungen für Wasserdampf im Kolben größer als die im Zuleitungsstutzen für Wasserdampf, so daß durch eine Verschiebung des Kolbens die Durchgangsöffnung für Wasser verkleinert bzw. vergrößert werden kann, während sie auf der Dampfseite unverändert bleibt. Dadurch läßt sich die Menge des Wassers bei gleichbleibender Dampfmenge vergrößern bzw. verringern.

Der Kolben ist in dem in das Gehäuse bzw. in dem in dieses koaxial eingesetzten Zylinder mittels eines Handrades oder eines Motorantriebs hin- und herverschiebbar angeordnet. Dabei kann bevorzugt der Zylinder dadurch axial im Gehäuse fixiert sein, daß der Nippel für den Anschluß der Wasserdampf- und/oder Kaltwasserleitung in eine Radialbohrung im Zylinder eingreift. Das erleichtert die Montage des Zylinders im Gehäuse. Der Zylinder ist bevorzugterweise durch einen Zapfen gegen Verdrehung gesichert. Grundsätzlich kann der Zylinder entfallen, wenn die Gehäusebohrung als Zylinder ausgebildet ist.

Durch ein drehbares, axial nicht bewegliches Handrad kann der Kolben im Zylinder axial verschoben werden. Dies ist alternativ auch mittels eines Elektromotors möglich. Dieser kann von einem Temperaturfühler, der z.B. die Mischtemperatur Wasser/Dampf mißt, gesteuert werden. So läßt sich die Mischtemperatur regeln, indem bei einem Anstieg der Mischtemperatur durch die vom Temperaturfühler ausgelöste Axialverschiebung des Kolbens im Zylinder die Wasserdurchtrittsöffnung vergrößert und so der Wasseranteil des Wasser-Dampf-Gemisches vergrößert wird, wodurch die Mischtemperatur auf den Sollwert wieder gesenkt wird. Beim Absinken der Mischtemperatur unter den Sollwert wird die Wasserdurchtrittsöffnung im Gehäuse durch Axialverschiebung des Kolbens verkleinert und so der Wasseranteil gegenüber dem Dampfanteil des Gemisches verkleinert, wodurch die Mischtemperatur wieder auf den Sollwert ansteigt.

Gemäß einer weiteren bevorzugten Ausgestaltung der erfindungsgemäßen Vorrichtung ist in Strömungsrichtung hinter dem Ventil eine Düse für Wasserdampf unter Bildung eines vom Wasser durchströmten Ringraums in seinem an das Ventilgehäuse angeformten oder angeschlossenen Gehäuseabschnitt eingesetzt. Es kann auch ein das Wasser-Dampf-Gemisch aufnehmendes Mischgefäß an den Gehäuseabschnitt angeflanscht sein, das einen Stutzen für den Anschluß des Zuleitungsschlauchs zur Spritzpistole aufweist.

Auf der Kaltwasserseite sind bevorzugt Viton-Dichtringe und auf der Dampfseite Teflon-Dichtringe eingesetzt.

Anhand des in der Zeichnung dargestellten Ausführungsbeispiels wird die Erfindung näher erläutert. Es zeigen:
- Fig. 1: einen Längsschnitt der erfindungsgemäßen Vorrichtung in der Schließstellung des Ventils,
- Fig. 2: das Ventilgehäuse in vergrößertem Maßstab in der Öffnungsstellung,
- Fig. 3: einen Längsschnitt des Ventilgehäuses mit dem Kolben in einer Stellung, in der der Wasserzulauf gedrosselt ist

Gleiche Teile sind in den verschiedenen Abbildungen mit denselben Bezugszeichen versehen.

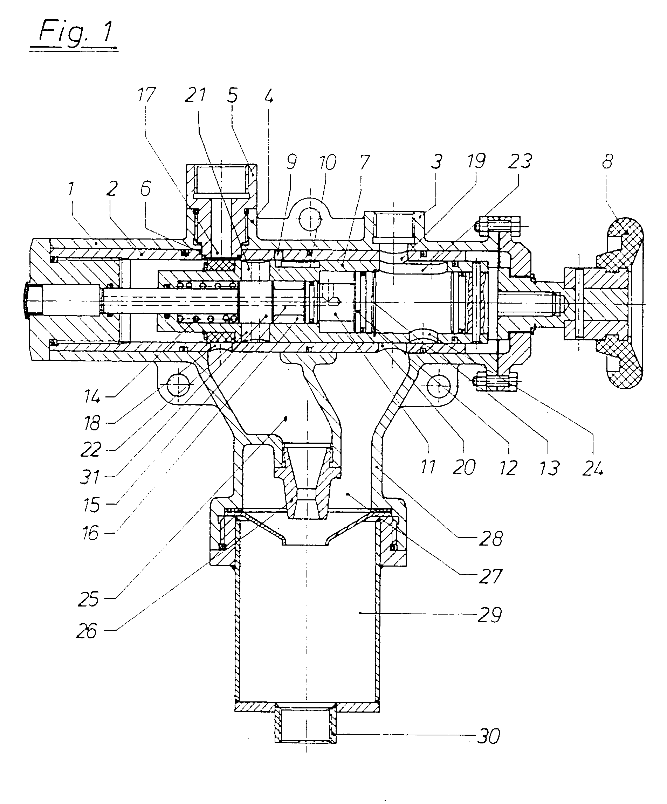

Die erfindungsgemäße Vorrichtung umfaßt gemäß der Übersicht in Fig. 1 ein Gehäuse 1, in dessen zylindrischem Hohlraum ein mantelförmiger Zylinder 2 formschlüssig eingeschoben und durch Dichtringe gegenüber der Innenwandung des Gehäuses 1 abgedichtet ist. An das Gehäuse 1 sind radial zwei axial beabstandete Stutzen 3 und 4 angeformt, ersterer für den Anschluß einer Wasserleitung und letzterer für den Anschluß einer Dampfleitung. In den Stutzen 4 ist ein Nippel 5 eingesetzt, dessen Endabschnitt in eine entsprechend große Radialbohrung 6 im Mantel des Zylinders 2 eingreift und den Zylinder 2 dadurch axial in dem Gehäuse 1 fixiert.

In dem Zylinder 1 ist formschlüssig ein Kolben 7 koaxial angeordnet und mittels des Handrades 8 in dem Zylinder hin- und herverschiebbar. Die Endstellungen des Kolbens 7 werden durch eine Nut 10 im Kolben 7 begrenzt, in die ein in die Wand des Zylinders 2 eingesetzter Zapfen 9 mit seinem über die Innenwand des Zylinders 2 hinausragenden Abschnitt eingreift. Die Länge dieser Nut 10 entspricht so dem Verschiebeweg des Kolbens 7 im Zylinder 2.

Koaxial zu dem Gehäuse 1, dem Zylinder 2 und dem Kolben 7 ist ein Ventil 11 angeordnet und im Kolben 7 axial verschiebbar gelagert. Das Ventil 11 hat einen verbreiterten Kopfabschnitt 12, der in der Fig. 1 dargestellten Schließ-Endstellung an einem seine Verschiebung nach rechts begrenzenden Seegerring 13 als Anschlag anliegt. Durch eine Druckfeder 14 wird das Ventil 11 in diese Endstellung nach rechts gedrückt. Der Mittelabschnitt 15 des Ventils 11 ist durchmesserreduziert abgesetzt unter Bildung eines Ringspaltes 16 zwischen diesem Mittelabschnitt 15 und der gegenüberliegenden Wandung des Kolbens 7.

In der Wandung des Zylinders 2 sind jeweils zwei einander diametral gegenüberliegende Öffnungen 17, 18 auf der Wasserdampfseite und 19, 20 auf der Wasserseite vorgesehen. Ebenso sind im Kolben 7 einander paarweise diametral gegenüberliegende Durchtrittsöffnungen 21, 22 auf der Dampfseite und 23, 24 auf der Wassereite. Die Durchtrittsöffnungen 21, 22 auf der Dampfseite im Kolben 7 haben einen größeren Querschnitt als die Durchtrittsöffnungen 17, 18 im Zylinder 2. Die Öffnung 23 im Kolben 7 auf der Wasserseite ist größer als die Öffnung 19 im Zylinder auf der Zulaufseite für Wasser, während die wasserseitigen Öffnungen 20, 24 im Kolben 7 und Zylinder 2 auf der Wasseraustrittsseite gleich großen Querschnitt haben. Der Zweck dieser Größenbemessung der Durchtrittsöffnungen 17 bis 24 wird weiter unten noch erläutert.

Die dampfseitige Öffnung 18 im Zylinder mündet in einen erweiterten Entspannungsraum 25 im Gehäuseabschnitt 28, an dem eine Düse 26 angesetzt ist, welche der Dampf passieren muß und dabei beschleunigt wird. Um diese Düse 26 ist ein von Wasser durchströmter Ringraum 27 gebildet. Der aus der Düse mit erhöhter Geschwindigkeit ausströmende Wasserdampf reißt aus dem Ringraum 27 Wasser mit und verwirbelt mit diesem turbulent unter Bildung von Naßdampf. An den die Düse 26 enthaltenden Gehäuseabschnitt 28 ist ein Mischgefäß 29 angeflanscht, welches mit einem Nippel 30 zum Anschluß eines Spritzpistolenschlauchs versehen ist.

Die erwähnten Vorrichtungsteile sind auf der Dampfseite durch Viton-Ringe abgedichtet, während auf der Kaltwasserseite Teflon-Dichtring eingesetzt sind.

Das Gehäuse 1 kann bevorzugt aus Aluminiumguß sein, während Zylinder 2, Kolben 7 und Ventil 11 aus Edelstahl bestehen sollten.

Die Wirkungsweise der erfindungsgemäßen Wasser-Dampf-Mischvorrichtung ist wie folgt:

In Fig. 1 ist die Vorrichtung mit dem Kolben 7 in der Schließstellung dargestellt. Der Kolben 7 verschließt dabei auf der Dampfseite sowohl die Öffnung 17 auf der Eintrittsseite wie auch die Öffnung 18 auf der Austrittsseite im Zylinder 2. Auf der Wasserseite hat der Kolben 7 die Wasseraustrittsöffnung 20 im Zylinder 2 überdeckt. Es können so weder Dampf noch Wasser durch das Gehäuse 1 fließen.

Zum Öffnen der Durchgänge für Wasser und Dampf werden zunächst in den nicht dargestellten Dampf- und Wasserzuleitungen vorhandene Absperrorgane geöffnet. Dadurch gelangt Dampf durch den Nippel 5 bis zur verschlossenen Öffnung 17 im Gehäuse 1 und Wasser durch den Stutzen 3, durch die Öffnungen 19 im Zylinder 2 und die Öffnung 23 im Kolben 7 in das Innere des Kolbens. Der Wasserdruck wirkt dann auf den Kopfabschnitt 12 des Ventils 11 und bewirkt eine Verschiebung des Ventils 11 in der Zeichnung nach links gegen den Druck der endseitigen Feder 14 bis der durchmesserreduzierte Mittelabschnitt 15 des Ventils 11 mit den Durchtrittsöffnungen 21 und 22 im Kolben 7 auf der Dampfseite fluchten. Dadurch bilden die Öffnung 21 mit dem Ringraum 16 um den durchmesserreduzierten Mittelabschnitt 15 des Ventils 11 und der Öffnung 22 einen Durchgang. In diesem Zustand sind aber die Wasser- und die Dampfseite noch geschlossen und der Durchgang für beide Medien durch das Ventilgehäuse 1 ist gesperrt.

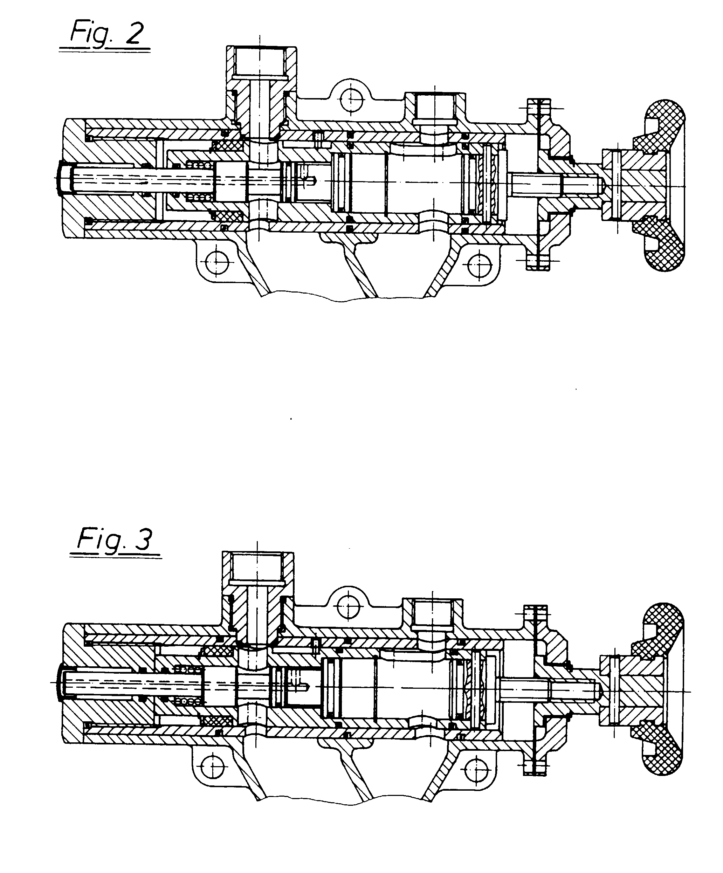

Um nun ein Öffnen der Durchgänge hervorzurufen, wird der Kolben 7 durch Drehen des Handrades 8 aus der in Fig. 1 dargestellten Schließstellung nach und nach in axialer Richtung im ortsfesten Zylinder 2 und Gehäuse 1 in der Zeichnung nach links in die Öffnungsstellung gemäß Fig. 2 verschoben. In dieser Stellung fluchten auf der Dampfseite nun die Öffnungen 17 über den Durchgang 21, 16, 22 mit der Austrittsöffnung 18, während auf der Wasserseite die Austrittsöffnungen 24 im Kolben 7 mit der Öffnung 20 im Zylinder 2 fluchten. Nun können sowohl Dampf wie auch Wasser das Gehäuse passieren. Der Dampf gelangt in den Entspannungsraum 25 in dem Gehäuseabschnitt 28, wird in der Düse 26 beschleunigt und reißt aus dem ihn umgebenden Ringraum 27 Wasser mit in das Mischgefäß 29, aus dem dann der Naßdampf über den Stutzen 30 in den Schlauch zur Spritzpistole strömen kann.

Bleibt nun aus irgendeinem Grund der Wasserstrom weg, so fällt der Wasserdruck im Kolbeninneren. Daraufhin kann sich die Druckfeder 24 infolge des fehlenden (Wasser-)Gegendrucks entspannen und schiebt das Ventil 11 in der Zeichnung nach rechts bis zu dem durch den Seegerring 13 gebildeten Anschlag. Bei dieser Bewegung schiebt sich der sich an den durchmesserreduzierten Mittelabschnitt 15 anschließende Abschnitt 31 des Ventils 11 über die Durchtrittsöffnungen 21 und 22 im Kolben 7 bis zur vollen Überdeckung und Trennung derselben voneinander, wie wiederum aus Fig. 1 zu erkennen ist. Der Durchgang auf der Dampfseite ist damit versperrt, obwohl die Durchtrittsöffnungen 21 und 22 im Kolben immer noch mit den Öffnungen 17 und 18 im Zylinder 2 fluchten. Dadurch ist sichergestellt, daß niemals Dampf das Ventilgehäuse passieren kann, wenn der Wasserstrom ausbleibt.

Das Ventil 11 sorgt dann automatisch für einen Verschluß des Durchgangs für Dampf durch das Gehäuse 1.

Wenn das Wasser-Dampf-Gemisch nicht heiß genug ist, kann der Kolben 7 über die in Fig. 2 dargestellte Öffnungsstellung hinaus weiter in der Zeichnung nach links in die in Fig. 3 dargestellte Endstellung verschoben werden. In dieser Stellung ist der Durchgangsquerschnitt für den Dampf unverändert geblieben, während auf der Wasserseite durch die teilweise Überlappung der Austrittsöffnungen 24 und 20 im Kolben 7 bzw. Zylinder 2 die Wassermenge reduziert wird. Dadurch erhöht sich der Dampfanteil entsprechend, was zu einer Erhöhung der Temperatur des Wasser-Dampf-Gemisches führt.

## Patentansprüche

1. Vorrichtung zum Mischen von Wasser und Wasserdampf, umfassend:
ein einen zylindrischen Hohlraum aufweisendes Gehäuse (1), an das quer zur Achse seines zylindrischen Hohlraums ein Stutzen (4) für Wasserdampf und in axialem Abstand zu diesem ein weiterer Stutzen (3) für Wasser angesetzt oder angeformt sind,
einen in dem Gehäuse (1) axial verschiebbaren Kolben (7), und
ein in dem Gehäuse (1) angeordnetes, vom Wasserdruck gesteuertes Ventil (11), das bei Unterbrechung der Zufuhr von Wasser eine Zuleitung für Wasserdampf automatisch schließt, wobei das Ventil unter dem Druck einer Feder (14) steht, die das Ventil bei fehlendem Wasserdruck gegen einen Endanschlag in die Schließstellung schiebt, in welcher das Ventil (11) den Durchgang des Wasserdampfes sperrt, wobei bei vorhandenem Wasserdruck das Ventil (11) gegen die Wirkung der Feder (14) in die Öffnungsstellung verschoben wird, in der es den Durchgang des Wasserdampfes erlaubt,
**dadurch gekennzeichnet**, daß
in dem zylindrischen Hohlraum des Gehäuses (1) ein Zylinder (2) zum Aufnehmen des Kolbens formschlüssig eingesetzt ist, wobei in dem Zylinder Durchtrittsöffnungen (17, 18) auf der Dampfseite und Durchtrittsöffnungen (19, 20) auf der Wasserseite vorgesehen sind, die in der Öffnungsstellung des Ventils mit Durchtrittsöffnungen (21, 22) im Kolben (7) auf der Dampfseite und Durchtrittsöffnungen (23, 24) im Kolben (7) auf der Wasserseite fluchten und in der Schließstellung des Kolbens (7) einander nicht überdecken,
das Ventil (11) koaxial und formschlüssig in einer Axialbohrung im Kolben (7) gegenüber diesem axial verschiebbar ist und einen dem Wasserdruck ausgesetzten Kopfabschnitt aufweist, wobei das Ventil (11) in der Schließstellung den Durchgang des Wasserdampfes durch die Offnungen (21, 22) im Kolben (7) sperrt und in der Offnungsstellung den Durchgang des Wasserdampfes durch die Öffnungen (21, 22) im Kolben (7) öffnet, und
die Durchtrittsöffnungen (21, 22, 23, 24) im Kolben (7) so angeordnet sind, daß das Mischungsverhältnis Wasser-Wasserdampf veränderbar ist.

2. Vorrichtung nach Anspruch 1,
dadurch gekennzeichnet, daß das Ventil (11) einen durchmesserreduzierten Mittelabschnitt (15) aufweist und in der Öffnungsstellung die Durchtrittsöffnungen (21, 22) im Kolben (7) durch seinen durchmesserreduzierten Mittelabschnitt (15) miteinander verbindet.

3. Vorrichtung nach Anspruch 1 oder 2,
dadurch gekennzeichnet, daß der Zylinder (2) im Gehäuse (1) durch einen Nippel (5) für die Zuleitung von Wasserdampf und/oder Kaltwasser dadurch axial fixiert ist, daß der Nippel (5) in eine Radialbohrung (6) im Zylinder (2) eingreift.

4. Vorrichtung nach einem der Ansprüche 1 bis 3,
dadurch gekennzeichnet, daß in Strömungsrichtung hinter dem Ventil (11) eine Duse (26) für Wasserdampf unter Bildung eines vom Wasser durchströmten Ringraums (27) in den an das Gehäuse (1) angeformten Gehäuseabschnitt (28) eingesetzt ist.

5. Vorrichtung nach Anspruch 4,
dadurch gekennzeichnet, daß an den Gehäuseabschnitt (28) ein das Wasser-Wasserdampf-Gemisch aufnehmendes Mischgefaß (29) angeflanscht ist, das einen Stutzen (30) für den Anschluß eines Zuleitungsschlauchs einer Spritzpistole aufweist.

6. Vorrichtung nach einem der Ansprüche 1 bis 5,
dadurch gekennzeichnet, daß auf der Kaltwasserseite Viton-Dichtringe und auf der Dampfseite Teflon-Dichtringe eingesetzt sind.

7. Vorrichtung nach einem der Ansprüche 1 bis 6,
dadurch gekennzeichnet, daß das Gehäuse (1) aus Aluminiumguß und der Zylinder (2), der Kolben (7) und das Ventil (11) aus Edelstahl bestehen.

8. Vorrichtung nach einem der Anspruche 1 bis 7,
dadurch gekennzeichnet, daß der Zylinder (2) durch einen Zapfen (9) gegen Verdrehung gesichert ist.

9. Vorrichtung nach einem der Ansprüche 1 bis 8,
dadurch gekennzeichnet, daß durch ein drehbares, nicht axial bewegliches Handrad (8) eine Axialbewegung in den Kolben (7) einleitbar ist.

10. Vorrichtung nach einem der Ansprüche 1 bis 9,
dadurch gekennzeichnet, daß für eine Axialverschiebung des Kolbens (7) im Zylinder (2) ein durch einen Temperaturfühler gesteuerter Elektromotor angeordnet ist.

## Claims

1. A device for the mixing of water and steam, comprising:
a casing (1) which has a cylindrical cavity, placed or moulded on which transversely of the axis of its cylindrical cavity are a spigot (4) for steam and at an axially distance therefrom a further spigot (3) for water,
a piston (7) axially slidable in the casing (1), and
a valve (11), disposed in the casing (1) and controlled by the water pressure, which when the water supply is interrupted automatically closes a supply line for steam, the valve being under the pressure of a spring (14) which in the absence of water pressure moves the valve against an end stop into the closure position, in which the valve (11) closes the passage for the steam, while in the presence of water pressure the valve (11) is displaced against the force of the spring (14) into the opening position, in which it allows the passage of the steam,
characterised in that
a cylinder (2) for receiving the piston is inserted positively in the cylindrical cavity of the casing (1), the cylinder being formed with flow openings (17, 18) on the steam side and flow openings (19, 20) on the water side which in the opening position of the valve are in alignment with flow openings (21, 22) in the piston (7) on the steam side and flow openings (23, 24) in the piston (7) on the water side and do not register with one another in the closure position of the piston (7),
the valve (11) is disposed coaxially and positively in an axial bore in the piston (7) to slide axially in relation thereto and has a head portion subjected to the water pressure, the valve (11) in the closure position closing the flow of steam through the openings (21, 22) in the piston (7) and in the opening position opening the flow of the steam through the openings (21, 22) in the piston (7), and
the flow openings (21, 22, 23, 24) in the piston (7) are so arranged that the water/steam mixing ratio can be adjusted.

2. A device according to claim 1,
characterised in that the valve (11) has a central portion (15) of reduced diameter and in the opening position interconnects the flow openings (21, 22) in the piston (7) via its central portion (15) of reduced diameter.

3. A device according to claims 1 or 2,
characterised in that the cylinder (2) is axially fixed in the casing (1) by a nipple (5) for the supply of steam and/or cold water engaging in a radial bore (6) in the cylinder (2).

4. A device according to claims 1 to 3,
characterised in that in the direction of flow downstream of the valve (11) a nozzle (26) for steam is inserted in the casing portion (28) formed on the casing (1), with the formation of an annular space (27) through which water flows.

5. A device according to claim 4,
characterised in that a mixing vessel (29) receiving a water/ steam mixture is flanged to the casing portion (28) and has a spigot (30) for the connection of a supply hose or a spray gun.

6. A device according to claims 1 to 5,
characterised in that Viton sealing rings are inserted on the cold water side and Teflon sealing rings on the steam side.

7. A device according to claims 1 to 6,
characterised in that the casing (1) is made of cast aluminium and the cylinder (2), the piston (7) and the valve (11) of high-grade steel.

8. A device according to claims 1 to 7,
characterised in that the cylinder (2) is secured against rotation by a pin (9).

9. A device according to claims 1 to 8,
characterised in that an axial motion can be introduced into the piston (7) via a rotatable hand wheel (8) which is immovable axially.

10. A device according to claims 1 to 9,
characterised in that an electric motor controlled by a temperature sensor is provided for an axial displacement of the piston (7) in the cylinder (2).

## Revendications

1. Dispositif pour mélanger de l'eau et de la vapeur d'eau, comprenant :
un boîtier (1) comportant une cavité cylindrique et sur lequel sont montées ou moulées, transversalement par rapport à l'axe de la cavité cylindrique du boîtier, une tubulure (4) pour la vapeur d'eau et, à distance axiale de cette tubulure, une autre tubulure (3) pour l'eau,
un piston (7) déplaçable axialement dans le boîtier (1), et
une soupape (11) qui est disposée dans le boîtier (1), est commandée par la pression de l'eau et, en cas d'interruption de l'envoi d'eau, ferme automatiquement une canalisation d'amenée de la vapeur d'eau, la soupape étant soumise à la pression d'un ressort (14), qui déplace la soupape en cas d'absence de pression de l'eau, contre une butée d'extrémité dans la position fermée, dans laquelle la soupape (11) bloque le passage de la vapeur d'eau, alors que, dans le cas où la pression de l'eau est présente, la soupape (11) est déplacée à l'encontre de l'action du ressort (14) dans la position d'ouverture, dans laquelle elle permet le passage de la vapeur d'eau,
caractérisé en ce que
dans la cavité cylindrique du boîtier (1) est inséré, moyennant une adaptation de formes complémentaires, un cylindre (2) servant à recevoir le piston, des ouvertures de passage (17, 18) étant prévues dans le cylindre sur le côté vapeur, tandis que des ouvertures de passage (19, 20) sont prévues du côté de l'eau, ouvertures de passage qui, lorsque la soupape est dans la position ouverte, sont alignées avec des ouvertures de passage (21, 22) aménagées dans le piston (7) du côté vapeur et avec des ouvertures de passage (23, 24) aménagées dans le piston (7) du côté de l'eau et, lorsque le piston (7) est dans la position fermée, ne se chevauchent pas,
la soupape (11) est déplaçable coaxialement et moyennant une adaptation de formes complémentaires dans un alésage axial formé dans le piston (7) et axialement par rapport au piston, et comporte une section de tête, qui est soumise à la pression de l'eau, dans la position fermée, la soupape (11) bloquant le passage de la vapeur d'eau à travers les ouvertures (21, 22) formées dans le piston (7) et, dans la position ouverte, la soupape ouvrant le passage de la vapeur d'eau par les ouvertures (21, 22) formées dans le piston (7), et
les ouvertures de passages (21, 22, 23, 24) aménagées dans le piston (7) sont disposées de telle sorte que le rapport de mélange eau-vapeur d'eau peut être modifié.

2. Dispositif selon la revendication 1, caractérisé en ce que la soupape (11) possède une section médiane (15) de diamètre réduit et, dans la position ouverte, relie entre elles les ouvertures de passage (21, 22) formées dans le piston (7), par sa section médiane (15) de diamètre réduit.

3. Dispositif selon la revendication 1 ou 2, caractérisé en ce que le cylindre (2) est fixé axialement dans le boîtier (1) au moyen d'un raccord fileté (5) servant à amener la vapeur d'eau et/ou l'eau froide, par le fait que le raccord fileté (5) s'engage dans un perçage radial (6) formé dans le cylindre (2).

4. Dispositif selon l'une des revendications 1 à 3, caractérisé en ce qu'une buse (26) pour la vapeur d'eau est insérée dans la section (28) du boîtier (1) moulée sur ce dernier, en aval de la soupape (11) dans la direction d'écoulement, en formant une chambre annulaire (27) parcourue par l'eau.

5. Dispositif selon la revendication 4, caractérisé en ce qu'à la section (28) du boîtier est raccordé par bride un récipient de mélange (29) qui reçoit le mélange eau-vapeur d'eau et qui possède une tubulure (30) pour le raccordement d'un tuyau d'alimentation d'un pistolet de pulvérisation.

6. Dispositif selon l'une des revendications 1 à 5, caractérisé en ce que des bagues d'étanchéité en Viton sont insérées du côté de l'eau froide et que des bagues d'étanchéité en Téflon sont insérées du côté de la vapeur.

7. Dispositif selon l'une des revendications 1 à 6, caractérisé en ce que le boîtier (1) est constitué par de la fonte d'aluminium et que le cylindre (2), le piston (7) et la soupape (11) sont réalisés en acier spécial.

8. Dispositif selon l'une des revendications 1 à 7, caractérisé en ce que le cylindre (2) est bloqué contre toute rotation par un téton (9).

9. Dispositif selon l'une des revendications 1 à 8, caractérisé en ce qu'un déplacement axial dans le piston (7) peut être déclenché au moyen d'un volant rotatif (8) non déplaçable axialement.

10. Dispositif selon l'une des revendications 1 à 9, caractérisé en ce qu'un moteur électrique commandé par un capteur de température est disposé de manière à permettre un déplacement axial du piton (7) dans le cylindre (2).
